# EUROPEAN PATENT APPLICATION

(11) **EP 4 572 419 A1**
(43) Date of publication of application: **18.06.2025**
(21) Application number: 23852700.6
(22) Date of filing: 12.06.2023
(51) Int. Cl.: H04W 52/02, H04W 60/04, H04W 76/30, H04W 8/24, H04W 84/06

(54) **TERMINAL POWER MANAGEMENT METHOD**

(30) Priority: 09.08.2022 US 202263396229 P
(71) Applicant: LG Electronics Inc., Yeongdeungpo-gu Seoul 07336 (KR)
(72) Inventor: KIM, Jaewoo, Seoul 06772 (KR); KIM, Hyunsook, Seoul 06772 (KR); KIM, Laeyoung, Seoul 06772 (KR); CHOE, Hyunjung, Seoul 06772 (KR); YOUN, Myungjune, Seoul 06772 (KR); KIM, Hongsuk, Seoul 06772 (KR)
(74) Representative: Maikowski & Ninnemann Patentanwälte Partnerschaft mbB
(86) International application number: PCT/KR2023/007989
(87) International publication number: WO 2024/034813

(57) **Abstract**

Provided in one embodiment of the present disclosure is a method by which an AMF performs communication. The method comprises the steps of: receiving a registration request message from a user equipment (UE), wherein the registration request message includes capability information about a mobile originated (MO) backoff mode of the UE; determining that the UE is attempting to go outside the coverage of a serving cell; transmitting a registration accept message to the UE; and transmitting, on the basis of the determination, to the UE, an indication for allowing the MO backoff mode to be performed.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL PROBLEM

In a discontinuous coverage, when a terminal goes out of coverage, transmitting the terminal's MO data causes power waste, so a power saving method is needed.

### TECHNICAL SOLUTION

When a terminal transmits its capability for MO backoff mode to the network and activates MO backoff mode, power saving is enabled by preventing the terminal from transmitting MO data and/or signaling.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 illustrates an example 5G system structure to which an implementation of the present specification may be applied.
FIG. 5 shows 5GS UE Leaving Coverage Procedure.
FIG. 6 illustrates a procedure according to the disclosure of this specification.
FIG. 7 shows the procedure of the AMF for the disclosure of this specification.
FIG. 8 shows the procedure of the UE for the disclosure of this specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

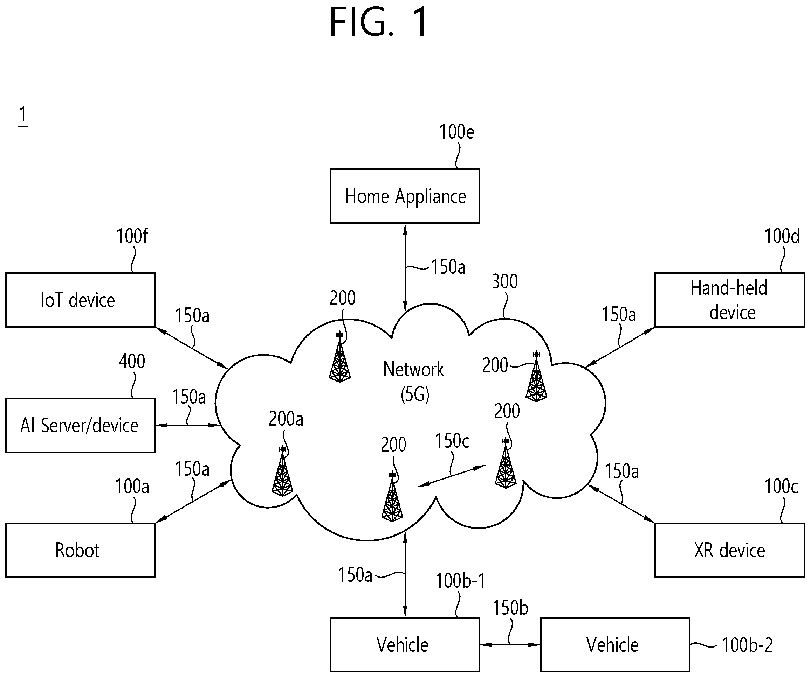

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self- determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

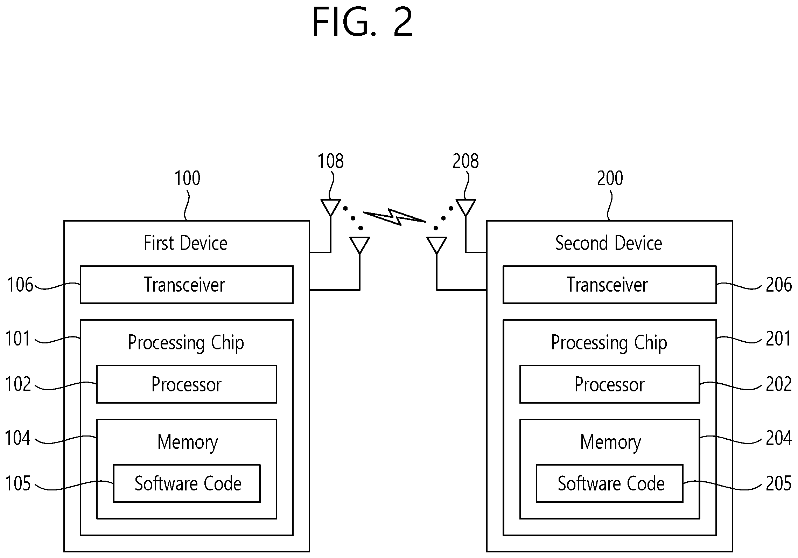

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

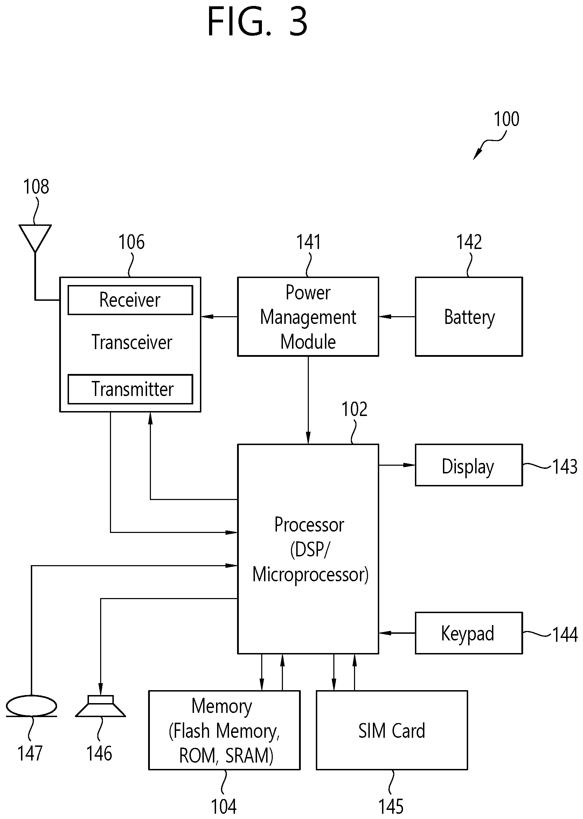

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

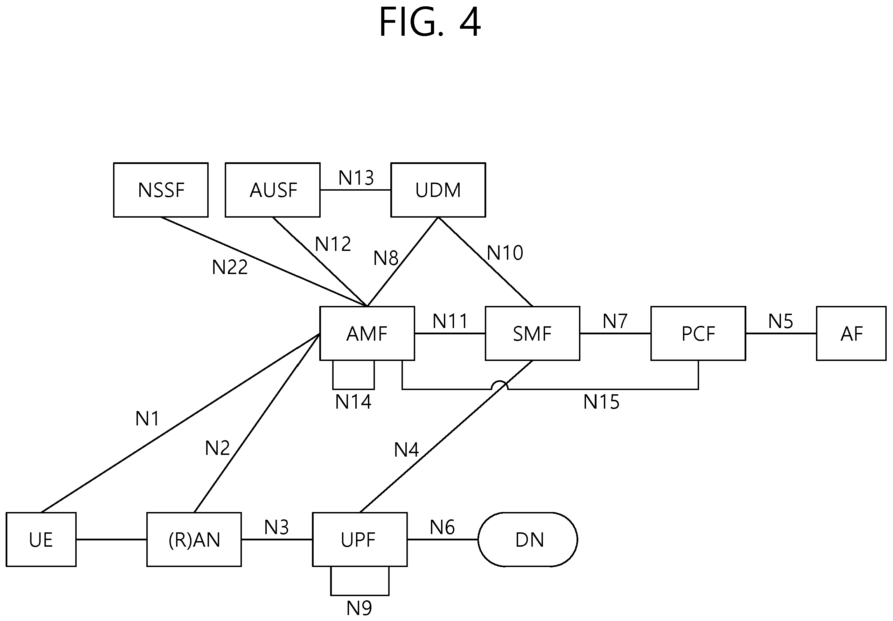

**FIG. 4** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 4 shows the 5G system structure of a non-roaming case using a reference point representation that shows how various network functions interact with each other.

In FIG. 4, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 4. For clarity, the connection between NWDAF and other NFs (e.g. PCFs) is not shown in FIG. 4.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Discontinuous coverage>

For a UE using a NG-RAN that provides discontinuous coverage (e.g. for satellite access with discontinuous coverage), the UE may be out of network coverage at a certain time. The UE may then attempt to scan for available cell due to the UL traffic or NAS layer signalling, e.g. Periodic Registration. In Rel-17, the UE in EPS may deactivate the access stratum when there is no network coverage, however there might still be some additional issues, e.g. whether de-registration occurs due to any inconsistency of CM states between UE and CN and, the usage of eDRX in CM-IDLE state, etc.

Therefore, for power saving mechanisms, like MICO mode and eDRX in CM-IDLE state, how to apply the power saving mechanism to ensure that the UE does not attempt PLMN access when there is no coverage still needs to be studied.

At least the following aspects need to be investigated:
- Based on the coverage information of the UE:
- whether and how to enhance the power saving mechanisms, e.g. PSM, MICO mode and eDRX in CM-IDLE state, in order to make sure that the UE:
- does not attempt PLMN access when there is no network coverage; and
- when there is network coverage the UE attempts PLMN access as needed e.g. to transfer signalling, transfer data or receive paging, etc.

Network coverage may be provided by any RAT supported by the UE.

The types of satellites may be divided into GEO (Geostationary Earth Orbit, geostationary satellite), MEO (Medium-Earth Orbit, medium-Earth Orbit satellite), and LEO (Low-Earth Orbit, low-Earth Orbit satellite) depending on their orbits. In the case of GEO, a very wide coverage is fixedly provided, but in the case of MEO or LEO, since the coverage changes as they orbit the Earth, there may be areas where coverage is not provided depending on the density and number of satellites. Since the areas where coverage is provided or not provided may change due to movement of the satellite according to its orbit, the satellite may provide discontinuous coverage to the terminal.

In the case where the satellite access network provides discontinuous coverage in 5GS, it is necessary to improve the power saving function of the terminals using the satellite access network. A method of minimizing the power consumption of the terminal (while out of coverage) by improving the power saving mechanism based on coverage information may be performed. For example, the operation of the UE may be controlled based on the orbital information of the satellite that the network (e.g., RAN or AMF) has. Or, the UE may propose an operation to the network and receive confirmation from the network based on the orbital information received from the satellite base station, etc.

According to the conventional 5GS technology, the terminal may receive satellite orbital information through the SIB19 information broadcast by the satellite access base station.

The SIB19 information elements are as follows:
- ntn-Config
- t-Service
- referenceLocation
- distance Thresh
- ntn-NeighCellConfigList {ntn-Config, carrierFreq, physCellId}
- lateNonCriticalExtension

distanceThresh is the distance from the serving cell reference location and is used in location-based measurement initiation in RRC_IDLE and RRC_INACTIVE. Each step represents 50m.
ntn-Config provides parameters needed for the UE to access NR via NTN access such as Ephemeris data, common TA parameters, k_offset, validity duration for UL sync information and epoch. The validity duration, ntn-UlSyncValidityDuration, is mandatory present.
ntn-NeighCellConfigList provides a list of NTN neighbour cells including their ntn-Config, carrier frequency and PhysCellId.
referenceLocation is the reference location of the serving cell provided via NTN quasi-Earth fixed system and is used in location-based measurement initiation in RRC_IDLE and RRC_INACTIVE.
t-Service indicates the time information on when a cell provided via NTN quasi-Earth fixed system is going to stop serving the area it is currently covering. The field indicates a time in multiples of 10 ms after 00:00:00 on Gregorian calendar date 1 January, 1900 (midnight between Sunday, December 31, 1899 and Monday, January 1, 1900). This field is excluded when determining changes in system information, i.e. changes of t-Service should neither result in system information change notifications nor in a modification of valueTag in SIB1. The exact stop time is between the time indicated by the value of this field minus 1 and the time indicated by the value of this field.

In the conventional 5GS technology, when releasing the RRC connection between the terminal and the base station, there is no separate 'cause' that informs the cause of the RRC connection release. When releasing the RRC connection, a 'wait time' may be transmitted, and the UE may not send a new RRC connection request message during the 'wait time' time.

The RRCRelease message is used to command the release of an RRC connection or the suspension of the RRC connection.

The signaling radio bearer of RRCRelease is SRB1, the RLC-SAP of RRCRelease is AM, and the logical channel of RRCRelease is DCCH. RRCRelease is transmitted from the network to the UE.

Next, a conventional method related to discontinuous coverage is described.

### 1. Conventional method

When a UE in CM-CONNECTED state is expected to go out of coverage, the RAN or AMF that detects this may release the connection with the UE and transmit the parameter (Power Saving Parameter) value for power saving, and transition the UE to CM-IDLE state. When the UE goes out of coverage or returns from coverage, the UE may send an indication to the AMF. While the UE is out of coverage, the UE may configure parameter values such as periodic registration timer, eDRX, PSM, etc. according to the Power Saving parameter calculated and transmitted by the AMF.

A method for improving mobility management through discontinuous satellite coverage and improving power saving for the UE in discontinuous coverage may be proposed.

When the UE is out of coverage, a UE is unreachable and any paging from the network will not succeed. The UE mobility patterns may be known to either the UE, network, both the UE and network or neither.

This solution combines proposed solutions for different cases of mobility and a solution for when the mobility pattern is not known therefore providing a complete solution for UE power saving and reachability management.

The solution has 2 phases.

The 1st phase when the UE is released, either at the end of a coverage window by the CN or the requested by the UE, or during a coverage period when the UE is not expected to return to CONNECTED during a coverage window. The 2nd phase is when the UE returns to coverage and the actions the UE takes when it returns to coverage.

Throughout the solution it is expected that the UE is aware of the coverage available from satellites and the UE, if it knows there is no coverage at a time, chooses not to attempt to activate its AS and initiate a connection or attempt to receive paging from the network.

If at any point between coverage periods, if the UE needs to connect to the network (e.g. for MO traffic or signalling) can detect coverage using a TN or NTN it can choose to initiate a connection, otherwise it is expected the UE will disable its AS procedures. Whether and how the UE choose to deactivate its AS when it is not required to receive paging or initiate a connection to the network is up to the UE implementation or maybe addressed by other solutions.

The UE maybe in RRC_CONNECTED at the end of a coverage period, or at any point during a coverage period and transitioning from RRC_CONNECTED to RRC_IDLE. If the UE is in RRC_CONNCETED the UE may send a Registration Request to the network to transfer its understanding of its mobility pattern before the UE is released. If the UE is in RRC_IDLE or RRC_CONNECTED at the end of a coverage period, the UE may send a Registration Request to the to notifying the network it is leaving network coverage. In both cases, after the Registration procedure the UE is released.

The UE sends a Registration Request to inform the network about 4 different cases related to discontinuous coverage:
i. The UE believes itself to be stationary or moving on a predictable trajectory.
ii. The UE understands it mobility and can predict a location it will be in the future and/or the time it will return to coverage at a location.
iii. The UE does not have an understanding of its mobility because it is not predictable.
iv. The UE is about to leave network coverage or has returned to network coverage and the UE has been requested to notify the network about its leaving network and returning to coverage in an earlier Registration procedure.

The network may use additional information to help determine the UE mobility in addition to the indications from the UE. This can include interactions with the NWDAF or other mobility information, for example mobility patterns provisioned by an AF to the network or other sources of information.

Taking into account the UEs indication about its mobility state, the network can combine it with information it holds and respond to the UE.

The response to the UE can be to:
i. Provide the UE with an eDRX cycle the UE should follow, if there is no satellite coverage available to the UE at a specific location
ii. Enable MICO/PSM mode for the UE, providing a periodic registration timer to the UE that coincides with coverage in the future so that the UE performs Periodic Registration or TAU when it returns to coverage.
iii. Provide an indication that the UE should inform the CN when it leaves and subsequently returns to coverage in the future at an unpredictable time and use MICO/PSM mode until the UE returns to coverage. The CN should provide a periodic registration timer to the UE that covers the longest expected period out of coverage.

If the UE is provided with an eDRX cycle, the CN may take into account the coverage at the predicted position when paging the UE. This may mean that some PTWs are skipped and this should be taken into account when responding to requests or providing a reachability time for the UE.

### (1) 5GS UE Leaving Coverage Procedure

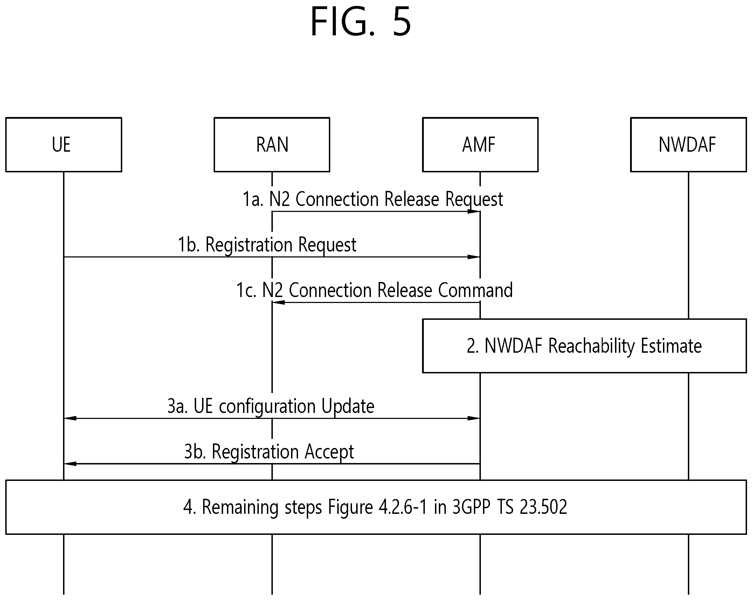

**FIG. 5** **shows 5GS UE Leaving Coverage Procedure.**

1a. RAN may detect the UE is leaving coverage and initiate N2 UE Context Release Request if the UE is in RRC_CONNECTED.

1b. The UE may send a Registration Request including:
- [Optional] a time when it expects to return to coverage, and/or
- [Optional] where the UE believes it will be when it returns to coverage, and/or
- [Optional] an indication that it does not know when or where it will be back in coverage.
- [Optional] an indication that the UE is leaving coverage if the UE has previously received a Leaving Notification

Indication instructing the UE to notify the network when it is leaving the network coverage.

The UE may be in RRC_IDLE or RRC_CONNECTED when it determines it needs to send the Registration Request.

1c. If the AMF detects that the UE is about to leave the current network coverage based on the coverage information, the AMF may trigger this procedure to move UE into CM-IDLE state when the UE is still within the network coverage.

2. [Optional] The AMF make request predicated mobility and coverage information from the NWDAF.

3. If the AMF had provided the UE with a Leaving Notification Indication and the UE is indicating that it is leaving coverage then a Registration Accept is sent, otherwise the AMF takes into account the UEs indications in Registration Request about mobility to determine whether to:
- Provide the UE with an eDRX configuration the UE should follow, if there is no satellite coverage available to the UE at a specific location.
- Enable MICO/PSM mode for the UE, providing a periodic registration timer to the UE that coincides with coverage in the future so that the UE performs Periodic Registration or TAU when it returns to coverage.
- Provide the UE with a Leaving Notification Indication so the UE informs the CN when leaves or returns to coverage in the future and use MICO/PSM mode until the UE is out of coverage. The CN should provide a periodic registration timer to the UE that covers the longest expected period out of coverage.

The AMF uses the UEs indications in the Registration Request, its knowledge of mobility and coverage, if available, and information from the NWDAF, if available, to determine what to indicate to the UE for handling the out of coverage period. The AMF may always provide a Periodic Registration Timer value, taking into account the coverage and how the UE will handle the out of coverage period.

If Registration Request was received in Step 1b, then the AMF may respond with Registration Accept (step 3b) otherwise the AMF may use the UE Configuration Update procedure (step 3a).

4. Steps 2 onwards of the AN Release Procedure as defined in clause 4.2.6 of TS 23.502 V17.3.0.

### (2) EPS UE Leaving Coverage Procedure

For the procedure for a UE leaving coverage in EPS may be the same as the 5GS procedure with the following modifications:
- Throughout: The TAU procedure instead of the Registration Procedure is used.
- Steps 1b & 3b: The ATTACH procedure may additionally be used.
- Steps 2 and 3a: The NWDAF and UCU procedure are not available in EPS, so these steps don't apply.
- Step 4: S1 UE Context Release Command and the S1 release procedure, instead of the N1 UE Context Release Command and the AN Release Procedure is used.

### (3) EPS and 5GS UE Returning to Coverage Procedure

This procedure may be used when the UE returns to coverage if it was instructed to inform the network during the leaving coverage procedure that it has returned to coverage or e.g. if the time the UE returns to coverage is different from the expected time as determined in the leaving procedure.

If 5GS is used then the Registration procedure is reused and if EPS is used then Tracking Area Update procedure is used.

The triggers the UE uses to detect coverage may be UE implementation dependent or defined by other solutions. The UE may take into account any previously received satellite ephemeris/coverage information from RAN, its expected or known position and time to determine whether to look for coverage.

Impacts on UE:
- UE may provide the AMF/MME with indications about its mobility predictability, including extrapolated future location and/or time in coverage, whether it is stationary/predictable mobility or not predictable.
- UE may send indications to the AMF/MME when it is leaving coverage/returning to coverage if instructed to do so.

Impacts on RAN:
- RAN may trigger AN Release for a UE if it is about to leave coverage.

Impacts on MME/AMF:
- MME/AMF may obtain information on future coverage given satellites motion.
- MME/AMF may trigger AN Release if the UE is about to leave coverage (5GS only).
- MME/AMF may configure the power saving parameters or Leaving Notification Indication based on the coverage information for the UE, indications from UE, information from the NWDAF (5GS only) and other information the MME/AMF may hold/have been provisioned with.
- MME/AMF may consider the UE unreachable while out of coverage.

In case of step 1a or step 1c of FIG. 5, if RAN or AMF predicts that the terminal will go out of coverage and transitions the terminal to IDLE state with power saving parameters, but the terminal may determine that it is not out of coverage yet based on coverage information measured by itself, then the terminal may generate uplink MO (Mobile Originated) data and/or signaling. In this case, even though the terminal will soon go out of coverage, the terminal may unnecessarily consume energy by attempting to connect to the network for data transmission. The terminal may receive parameters for power saving from the AMF through the UCU (UE Configuration Update) procedure. However, the above parameters may prevent the terminal from transitioning to the CM-CONNECTED state due to MT data by increasing the paging channel confirmation period or not confirming the paging channel due to restrictions on the downlink MT (Mobile Terminated) data of the terminal. Therefore, the above parameters cannot prevent the transmission attempt of the terminal by MO data and/or signaling of the terminal.

In the case of Service Gap Control used for IoT (Internet of Things) devices, it is a technology that restricts MO data during the Service Gap Timer in the CM-IDLE state. However, the timer is a technology for IoT terminals, and it operates every time it transitions from CM-CONNECTED to CM-IDLE state, so MO data may be restricted every time even if the terminal transitions from within coverage to CM-IDLE.

In a discontinuous coverage situation, the terminal may maintain the registration state in the network while being out of coverage for a certain period of time. In particular, when the network expects that the terminal will soon go out of coverage based on the coverage information of the network, and the network releases the connection with the terminal and sends power-saving parameters, a method is needed to prevent unnecessary UL data generation attempts by limiting the MO (Mobile Originated) data and/or signaling generated by the terminal.

### <Disclosure of the present specification>

The method for supporting power saving in discontinuous coverage of the proposed satellite access network may be composed of a combination of one or more of the following operations/configurations/steps.

These procedures and/or messages may be conventional procedures/messages, may be extended conventional procedures/messages, or may be defined and used as new procedures/messages.

In this specification, UE (User Equipment) and terminal are used interchangeably.

In this specification, N2 connection and RRC connection are used interchangeably.

In this specification, discontinuous coverage and discontinuous coverage are used interchangeably.

In this specification, the proposed content is mainly described.

In this specification, backoff mode time and backoff mode timer are used interchangeably.

### 1. First disclosure - Use of operation mode to block MO data/signaling of terminal

A new operation mode is proposed that can block MO (Mobile originated) data and/or signaling of terminal. (e.g. NTN MO backoff mode)

For example, a mode that can block the uplink signal of the terminal is proposed.

In this mode, the terminal may buffer the MO data and/or signaling that occurred without attempting an RRC connection when MO data and/or signaling occurred.

In order to operate in this mode, the terminal may transmit capability information supporting the NTN MO backoff mode together with the registration request message during the registration process. The AMF may transmit an indication accepting the use of the NTN MO backoff mode and/or an NTN MO backoff timer to the terminal. The NTN MO backoff timer transmitted to the terminal may be a value stored in the subscriber information. Alternatively, the NTN MO backoff timer transmitted to the terminal may be a value according to the coverage information.

In this way, if the terminal and the AMF have mutually agreed to use the NTN MO backoff mode or if the terminal itself supports the corresponding function even if there is no agreement, the NTN MO backoff mode may be started by the following process.
i. When the AMF predicts that the terminal will go out of coverage (including when the AMF receives information from the RAN that the terminal will go out of coverage), the NTN MO backoff mode may be initiated by the AMF triggering a UCU (UE Configuration Update) or sending an indication to the terminal to perform the NTN MO backoff mode in response to a Registration Request or a Service Request.
ii. When a terminal sends a registration request message to indicate that it is going out of coverage before the terminal goes out of coverage, the AMF may initiate the NTN MO backoff mode by sending the terminal an indication in the registration acknowledgement message to perform the NTN MO backoff mode.
iii. When the terminal in the IDLE state goes out of coverage and enters the NTN MO backoff mode by itself, the NTN MO backoff mode may be initiated.

In the cases of i and ii described above, the AMF may provide the terminal with a timer value to operate in the NTN MO backoff mode. In the case of iii, the terminal may set a timer to operate in the NTN MO backoff mode by itself. In all cases, the timer may be a value based on subscriber information or a value calculated using coverage information.

The NTN MO backoff timer may be applied only when the terminal camps on an NTN cell.

If the terminal camps on a TN cell, the timer may be stopped. Or, it may be maintained as it is considering the possibility of entering a satellite cell again.

The terminal may apply the NTN MO backoff timer to each satellite cell. For example, if the terminal is camping on a specific satellite cell and receives the NTN MO backoff mode timer, the NTN MO backoff timer may be applied only to that cell. If the terminal finds another satellite cell or TN cell and can camp, the terminal may stop the NTN MO backoff mode timer.

If the NTN MO backoff mode timer expires, the terminal may terminate the NTN MO backoff mode operation and attempt MO data/signaling normally.

When a UE in CM-CONNECTED state is expected to go out of coverage, the RAN or AMF that detects this may release the connection with the UE and transmit a parameter value for power saving (Power Saving Parameter) and transition the UE to CM-IDLE state. When the UE goes out of coverage or returns to coverage, the UE may send an indication to the AMF. While the UE is out of coverage, the UE may set parameter values such as periodic registration timer, eDRX, and PSM according to the Power Saving parameter calculated and transmitted by the AMF.

This is a solution for mobility management enhancement with discontinuous satellite coverage and power saving enhancement for UE in discontinuous coverage.

When the UE is out of coverage, a UE is unreachable and any paging from the network will not succeed. The UE mobility patterns may be known to either the UE, network, both the UE and network or neither.

This solution combines proposed solutions for different cases of mobility and a solution for when the mobility pattern is not known therefore providing a complete solution for UE power saving and reachability management.

The solution has 2 phases.

The 1st phase when the UE is released, either at the end of a coverage window by the CN or the requested by the UE, or during a coverage period when the UE is not expected to return to CONNECTED during a coverage window. The 2nd phase is when the UE returns to coverage and the actions the UE takes when it returns to coverage.

Throughout the solution it may be expected that the UE is aware of the coverage available from satellites and the UE, if it knows there is no coverage at a time, chooses not to attempt to activate its AS and initiate a connection or attempt to receive paging from the network.

If at any point between coverage periods, if the UE needs to connect to the network (e.g. for MO traffic or signalling) can detect coverage using a TN or NTN it can choose to initiate a connection, otherwise it may be expected the UE will disable its AS procedures. Whether and how the UE choose to deactivate its AS when it is not required to receive paging or initiate a connection to the network may be up to the UE implementation or maybe addressed by other solutions.

Alternatively, when it is not required to receive paging or initiate a connection to the network, for whether and how the UE choose to deactivate its AS, network may send an indication to the UE to withhold UL MO data traffic/signaling

The UE maybe in RRC_CONNECTED at the end of a coverage period, or at any point during a coverage period and transitioning from RRC_CONNECTED to RRC_IDLE. If the UE is in RRC_CONNCETED the UE may send a Registration Request to the network to transfer its understanding of its mobility pattern before the UE is released. If the UE is in RRC_IDLE or RRC_CONNECTED at the end of a coverage period, the UE may send a Registration Request to notify the network it is leaving network coverage. In both cases, after the Registration procedure the UE may be released.

The UE may send a Registration Request to inform the network about 4 different cases related to discontinuous coverage:
i. The UE may believe itself to be stationary or moving on a predictable trajectory.
ii. The UE may understand it mobility and can predict a location it will be in the future and/or the time it will return to coverage at a location.
iii. The UE may not have an understanding of its mobility because it is not predictable.
iv. The UE may be about to leave network coverage or has returned to network coverage and the UE has been requested to notify the network about its leaving network and returning to coverage in an earlier Registration procedure.

The network may use additional information to help determine the UE mobility in addition to the indications from the UE. This may include interactions with the NWDAF or other mobility information, for example mobility patterns provisioned by an AF to the network or other sources of information.

Taking into account the UEs indication about its mobility state, the network may combine it with information it holds and respond to the UE.

The response to the UE may be to:
i. Provide the UE with an eDRX cycle the UE should follow, if there is no satellite coverage available to the UE at a specific location
ii. Enable MICO/PSM mode for the UE, providing a periodic registration timer to the UE that coincides with coverage in the future so that the UE performs Periodic Registration or TAU when it returns to coverage.
iii. Provide an indication that the UE should inform the CN when it leaves and subsequently returns to coverage in the future at an unpredictable time and use MICO/PSM mode until the UE returns to coverage. The CN should provide a periodic registration timer to the UE that covers the longest expected period out of coverage.
iv. If the UE had provided its capability for supporting NTN MO Backoff Mode and AMF had accepted the NTN MO Backoff Mode during earlier Registration, the UE may provide an indication that the UE to enable NTN MO Backoff Mode with NTN MO Backoff time to withhold UL MO data traffic/signalling.

In order for a terminal to operate in NTN MO backoff mode, it may indicate in the Registration Request that the terminal can use NTN MO backoff mode when registering with the network in the previous registration procedure. Then, AMF may allow the use of NTN MO backoff mode.

AMF may indicate the time to operate in the mode by transmitting the NTN MO backoff time together with the indication to perform NTN MO backoff mode. This time may be a value based on subscriber information or a value calculated using coverage information for the UE.

If the UE is provided with an eDRX cycle, the CN may take into account the coverage at the predicted position when paging the UE. This may mean that some PTWs are skipped and this should be taken into account when responding to requests or providing a reachability time for the UE.

### (1) 5GS UE Leaving Coverage Procedure

The drawings below are created to illustrate specific examples of the present specification. The names of specific devices or names of specific signals/messages/fields depicted in the drawings are presented as examples, and therefore the technical features of the present specification are not limited to the specific names used in the drawings below.

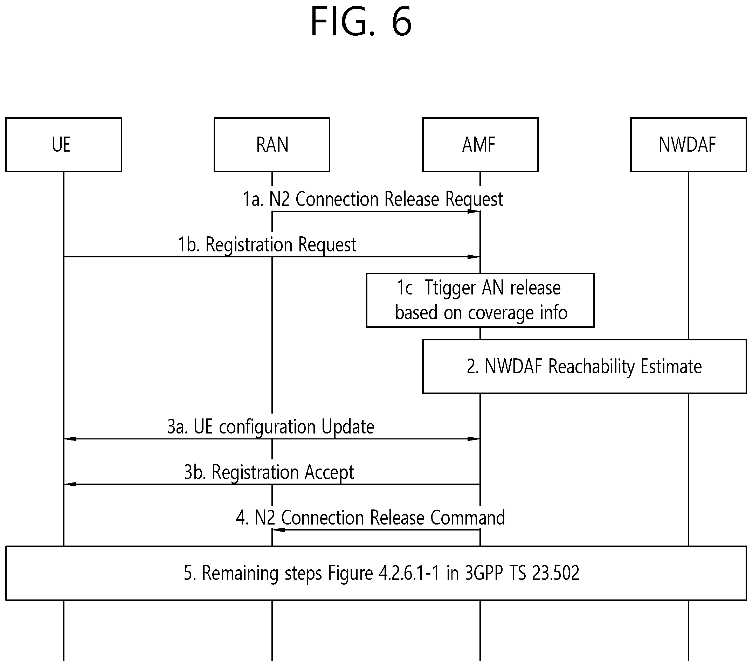

**FIG. 6** **illustrates a procedure according to the disclosure of this specification.**

1a. RAN may detect the UE is leaving coverage and initiate N2 UE Context Release Request if the UE is in RRC_CONNECTED.

In Step 1a, if RAN determines that the UE is going out of coverage, it may inform the AMF that the UE is going out of coverage by sending a N2 Connection Release Request with a new cause or indication that the UE is going out of coverage (e.g., Leaving Coverage).

The description of step 1b is replaced with the description of Fig. 5.

The description of step 2 is replaced with the description of Fig. 5.

3. If the AMF had provided the UE with a Leaving Notification Indication and the UE is indicating that it is leaving coverage, then a Registration Accept is sent, otherwise, the AMF may take into account the UEs indications in Registration Request about mobility to determine whether to:
- Provide the UE with an eDRX configuration the UE should follow, if there is no satellite coverage available to the UE at a specific location.
- Enable MICO/PSM mode for the UE, providing a periodic registration timer to the UE that coincides with coverage in the future so that the UE performs Periodic Registration or TAU when it returns to coverage.
- Provide the UE with a Leaving Notification Indication so the UE informs the CN when leaves or returns to coverage in the future and use MICO/PSM mode until the UE is out of coverage. The CN may be have to provide a periodic registration timer to the UE that covers the longest expected period out of coverage.
- If the UE and the AMF had negotiated NTN MO Backoff Mode, the AMF may include an indication to enable NTN MO Backoff Mode with NTN MO Backoff time.

When a terminal notifies the network that it will go out of coverage with a Registration Request for purposes such as a Leaving Notification Indication, the terminal may also transmit an indication that it will activate the NTN MO backoff mode. Then, the AMF may accept it with a Registration Accept message in response.

Or, even if the terminal does not provide an indication that it will activate the NTN MO backoff mode, the AMF may recognize that the Registration Request is intended to notify that the terminal will go out of coverage and may include an indication in the Registration Accept message requesting that the NTN MO backoff mode be activated. This AMF operation may be performed based on the fact that the base station transmits the registration request (including information or prediction information indicating that the terminal will go out of coverage) of the terminal to the AMF with the UL NAS Transport. This information may be always included when the base station transmits the UL NAS Transport, or may be included only when it is expected to go out of coverage. In both cases, AMF may provide an NTN MO backoff time value along with the Registration Accept message.

The AMF may use the UEs indications in the Registration Request, its knowledge of mobility and coverage(if available) and information from the NWDAF(if available) to determine what to indicate to the UE for handling the out of coverage period. The AMF may always provide a periodic registration timer value, taking into account the coverage and how the UE will handle the out of coverage period.

If Registration Request was received in Step 1b, then the AMF may respond with Registration Accept (step 3b), otherwise the AMF may use the UE Configuration Update procedure (step 3a).

If AMF determines that the UE will go out of coverage in Step 1c or receives information from RAN that the UE will go out of coverage in Step 1a, through UCU process, AMF may include an indication to activate NTN MO backoff mode and/or an NTN MO backoff time value in the UE Configuration Update Command and transmit it to the terminal.

The AMF may include an indication to enable NTN MO Backoff Mode with NTN MO Backoff Time during UE Configuration Update procedure.

4. The AMF may send an N2 UE Context Release Command to the (R)AN.

5. Steps 2 onwards of the AN Release Procedure as defined in clause 4.2.6 of TS 23.502 V17.3.0.

When a terminal in IDLE state recognizes that it will go out of coverage by itself, the terminal may decide to enter NTN MO backoff mode by itself without exchanging a separate message with the network. In this case, the terminal may not set the NTN MO backoff time value. Alternatively, the terminal may set the NTN MO backoff time value based on the coverage information it has.

When the AMF determines that the terminal in RRC_Inactive state will go out of coverage based on the above step 1a or step 1c or based on the mobility pattern of the terminal in IDLE RRC_Inactive / CONNECTED state, the AMF may transmit an indication to the terminal to activate the NTN MO backoff mode and the NTN MO backoff time to the terminal through the UCU.

The AMF may update the NTN MO backoff time to the terminal through Registration Accept or Service Accept or the UCU. If the UE receives an instruction from the network to activate the NTN MO backoff mode during Registration/Service Accept or UCU process but does not receive the NTN MO backoff time, the UE may use a pre-configured value (local configuration) or the time value received through a previous Registration/Service Accept or UCU.

### (2) EPS UE Leaving Coverage Procedure

For the procedure for a UE leaving coverage in EPS is the same as the 5GS procedure with the following modifications:
- Throughout: The TAU procedure instead of the Registration Procedure may be used.
- Steps 1b & 3b: The ATTACH procedure may additionally be used.
- Steps 2 and 3a: The NWDAF and UCU procedure may not be available in EPS, so these steps may not apply.
- Step 4: S1 UE Context Release Command and the S1 release procedure instead of the N1 UE Context Release Command and the AN Release Procedure may be used.

### (3) EPS and 5GS UE Returning to Coverage Procedure

This procedure may be used when the UE returns to coverage if it was instructed to inform the network during the leaving coverage procedure that it has returned to coverage (or e.g. if the time the UE returns to coverage is different from the expected time as determined in the leaving procedure).

If 5GS is used then the Registration procedure may be reused and if EPS is used then Tracking Area Update procedure may be used.

The triggers the UE uses to detect coverage may be UE implementation dependent or defined by other solutions. The UE may take into account any previously received satellite ephemeris/coverage information from RAN, its expected or known position and time to determine whether to look for coverage.

Impacts on UE:
- UE may provide the AMF/MME with indications about its mobility predictability, including extrapolated future location and/or time in coverage, whether it is stationary/predictable mobility or not predictable.
- UE may send indications to the AMF/MME when it is leaving coverage/returning to coverage if instructed to do so.
- UE may support NTN MO Backoff Mode when it is about to leaving coverage.

Impacts on RAN:
- RAN may trigger AN Release for a UE if it is about to leave coverage.

Impacts on MME/AMF:
- MME/AMF may obtain information on future coverage given satellites motion.
- MME/AMF may trigger AN Release if the UE is about to leave coverage (5GS only).
- MME/AMF may configure the power saving parameters or Leaving Notification Indication based on the coverage information for the UE, indications from UE, information from the NWDAF (5GS only) and other information the MME/AMF may hold/have been provisioned with.
- MME/AMF may consider the UE unreachable while out of coverage.
- MME/AMF may send an indciation to UE to enable NTN MO Backoff Mode with NTN MO Backoff time. (5GS only)

### 2. Second disclosure- How to include instructions in UCU procedures (NTN MO Backoff Control)

In Step 1a of FIG. 6, the RAN may determine that the UE is about to go out of coverage.

In Step 1c of FIG. 6, the AMF may determine that the UE is about to go out of coverage.

If the RAN determines that the UE is about to go out of coverage in Step 1a of FIG. 6, the RAN may transmit the N2 Connection Release Request to the AMF, including a new cause or indication that the UE is about to go out of coverage (e.g., Leaving Coverage). Then, the AMF may know that the UE is about to go out of coverage.

In both cases (Step 1a or Step 1c), the AMF may know that the UE is about to go out of coverage.

Once the AMF knows that the UE is about to go out of coverage, the AMF may transmit the UCU (UE Configuration Update) procedure of Step 3a of FIG. 6 to the UE, including an indication. The indication may be an indication for the UE not to transmit MO data and/or signaling of the UE, or may be an indication for the UE that the UE will soon be out of coverage. The AMF may request the UE not to transmit MO data and/or signaling during the given time by giving a backoff time (e.g., NTN MO backoff time) along with the indication. The backoff time may be a value stored in the subscriber information, or may be a value based on the network's calculation of the time the terminal will be out of satellite coverage based on the satellite coverage. Even after the backoff time expires, if the UE is still out of coverage, the UE may decide not to transmit MO data and/or signaling based on its own coverage information.

The UE may include the capability to support NTN MO backoff control in the Registration Request to transmit to the AMF in order to use the MO backoff mode. The AMF may include an indication of acceptance of the use of NTN MO backoff control and/or the NTN MO backoff time in the Registration Accept message and transmit it to the UE.

The NTN MO backoff time may be updated via Registration Accept or Service Accept or UCU. If the UE does not receive the NTN MO backoff time while receiving an indication from the network not to send MO data and/or signaling or an indication that coverage will be out of date, the UE may use a pre-configured (local configuration) value or a time value received via a previous Registration/Service Accept or UCU. If the UE also receives the NTN MO backoff time, the time value received may be used.

### 3. Third disclosure - how to use the RRC Disconnection Message that the RAN delivers to the UE

In Step 1a of FIG. 6, the RAN may determine that the UE will be out of coverage soon.

In Step 1c of FIG.6, the AMF may determine that the UE will be out of coverage soon.

In Step 1a of FIG.6, if the RAN determines that the UE is about to go out of coverage, the RAN may add a new cause to the N2 Connection Release Request. This new cause may indicate that the N2 Connection Release Request sent by the RAN to the AMF is due to the UE going out of coverage.

In Step 1c of FIG.6, if the AMF determines that the UE is about to go out of coverage, the AMF may add a new cause to the N2 Connection Release Command message and transmit it to the RAN. This new cause may indicate that the AMF is triggering the N2 connection release to the RAN because the UE is about to go out of coverage.

In both cases, the RAN transmits an RRC Connection Release message to the UE. Through the RRC Connection Release message, the RAN may indicate the UE to block UL MO data and/or signaling as in 3-1 or 3-2 below.

### 3-1. How to use wait time in RRC Connection Release message

RAN may transmit wait time via RRC connection release message to terminal. Then, when RRC layer of terminal receives wait time, terminal will not connect RRC connection during that time, and even if MO data and/or signaling occurs, terminal may not attempt RRC connection. And if terminal finds out that it is out of coverage based on coverage information, terminal may decide not to generate MO data and/or signaling even after wait time has elapsed.

When RRC layer of terminal receives wait time, it transmits time value to upper layer so that, it may buffer and store without transmitting if MO data and/or signaling occurs during that time. In this way, transmission of MO data and/or signaling may be blocked.

According to conventional technology, AS layer that receives wait time may inform NAS layer that access barring is applied. At this time, access categories '0' (MT) and '2' (emergency) are allowed. In this case, if the NAS layer receives information from the AS layer that access barring is applied while camping on the NTN cell, it may be performed that access categories '0' and '2' are also barred.

Or, the RAN may include an indication/cause in the RRC release message to indicate that the release is due to the terminal going out of coverage, and based on this, the AS layer of the terminal may notify the NAS layer that all access categories are barred.

### 3-2. Method of using by adding a new cause in the RRC disconnection message

The RAN may add a cause item to indicate the cause of the disconnection in the RRC disconnection message. The cause may indicate that the current RRC release is due to going out of satellite coverage. When the RRC layer of the terminal receives the cause, it may transmit the cause to the upper layer so that even if MO data and/or signaling occurs, it may buffer it without transmitting it for a predetermined time. In this way, transmission of MO data and/or signaling may be blocked.

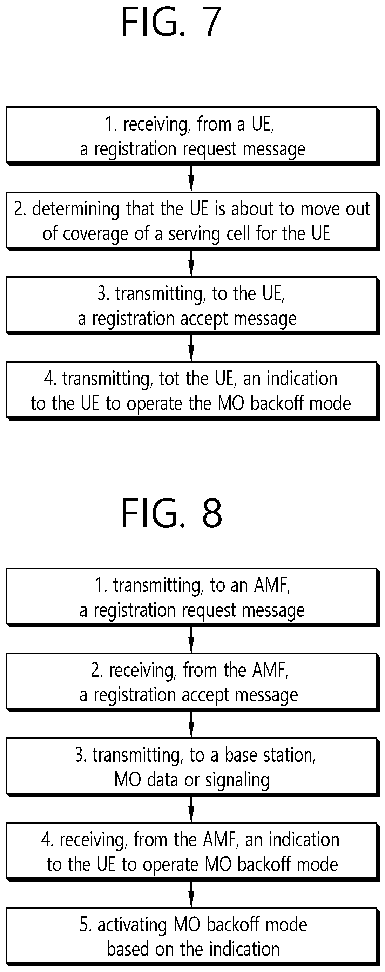

**FIG. 7** **shows the procedure of the AMF for the disclosure of this specification.**
1. The AMF may receive, from a UE (User Equipment), a registration request message.
   The registration request message may include capability information for MO (Mobile Originated) backoff mode of the UE.
2. The AMF may determine that the UE is about to move out of coverage of a serving cell for the UE.
3. The AMF may transmit, to the UE, a registration accept message.
4. The AMF may transmit, to the UE, an indication to the UE to operate the MO backoff mode, based on the determination that the UE is about to move out of coverage of the serving cell.

The indication may include a timer for the MO backoff mode.

The timer may be based on subscriber information, location of the UE or information related to the coverage of the serving cell.

The AMF may perform to trigger UCU (UE Configuration Update) procedure, based on the determination that the UE is about to move out of coverage of the serving cell,

The step of transmitting the indication may be performed based on the triggered UCU procedure.

The AMF may receive, from a base station, a N2 connection release request message.

The N2 connection release request message may include information that the UE is about to move out the coverage of the serving cell.

The determination may be performed, based on the information that the UE is about to move out the coverage of the serving cell.

The registration request message may include information that the UE is about to move out the coverage of the serving cell.

The determination may be performed, based on the information that the UE is about to move out the coverage of the serving cell.

**FIG. 8** **shows the procedure of the UE for the disclosure of this specification.**
1. The UE may transmit, to an AMF (Access and Mobility management Function), a registration request message.
   The registration request message may include capability information for MO (Mobile Originated) backoff mode of the UE.
2. The UE may receive, from the AMF, a registration accept message.
3. The UE may transmit, to a base station, MO data or signaling.
4. The UE may receive, from the AMF, an indication to the UE to operate MO backoff mode, based on the AMF determining that the UE is about to move out of coverage of a serving cell for the UE.
5. The UE may activate MO backoff mode based on the indication.

The UE may skip to transmit the MO data or the signaling, based on activation of the MO backoff mode.

The indication may include a timer for the MO backoff mode.

The timer may be based on subscriber information, location of the UE or information related to the coverage of the serving cell.

The UE may skip to transmit the MO data or the signaling during time of the timer, based on activation of the MO backoff mode.

The registration request message may include information that the UE is about to move out the coverage of the serving cell.

The step of receiving the indication may be performed, based on the information that the UE is about to move out the coverage of the serving cell.

Hereinafter, an apparatus for performing communication according to some embodiments of the present specification will be described.

For example, the apparatus may include a processor, a transceiver, and a memory.

For example, the processor may be configured to be operably coupled with a memory and a processor.

The processor may perform: receiving, from a UE (User Equipment), a registration request message; wherein the registration request message includes capability information for MO (Mobile Originated) backoff mode of the UE, determining that the UE is about to move out of coverage of a serving cell for the UE; transmitting, to the UE, a registration accept message; transmitting, to the UE, an indication to the UE to operate the MO backoff mode, based on the determination that the UE is about to move out of coverage of the serving cell.

Hereinafter, a processor for providing communication according to some embodiments of the present specification will be described.

The processor is configured to: receiving, from a UE (User Equipment), a registration request message; wherein the registration request message includes capability information for MO (Mobile Originated) backoff mode of the UE, determining that the UE is about to move out of coverage of a serving cell for the UE; transmitting, to the UE, a registration accept message; transmitting, to the UE, an indication to the UE to operate the MO backoff mode, based on the determination that the UE is about to move out of coverage of the serving cell.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: receiving, from a UE (User Equipment), a registration request message; wherein the registration request message includes capability information for MO (Mobile Originated) backoff mode of the UE, determining that the UE is about to move out of coverage of a serving cell for the UE; transmitting, to the UE, a registration accept message; transmitting, to the UE, an indication to the UE to operate the MO backoff mode, based on the determination that the UE is about to move out of coverage of the serving cell.

The present specification may have various effects.

For example, when a terminal using satellite access providing discontinuous coverage goes out of coverage, unnecessary power consumption can be reduced by preventing the generation of UL MO data/signaling of the terminal.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by an AMF (Access and Mobility management Function), comprising:
receiving, from a UE (User Equipment), a registration request message;
wherein the registration request message includes capability information for MO (Mobile Originated) backoff mode of the UE,
determining that the UE is about to move out of coverage of a serving cell for the UE;
transmitting, to the UE, a registration accept message;
transmitting, to the UE, an indication to the UE to operate the MO backoff mode, based on the determination that the UE is about to move out of coverage of the serving cell.

2. The method of claim 1,
wherein the indication includes a timer for the MO backoff mode,
wherein the timer is based on subscriber information, location of the UE or information related to the coverage of the serving cell.

3. The method of claim 1 or claim 2, further comprising:
performing to trigger UCU (UE Configuration Update) procedure, based on the determination that the UE is about to move out of coverage of the serving cell,
wherein the step of transmitting the indication is performed based on the triggered UCU procedure.

4. The method of one of the claims 1 to 3, further comprising:
receiving, from a base station, a N2 connection release request message,
wherein the N2 connection release request message includes information that the UE is about to move out the coverage of the serving cell,
wherein the determination is performed, based on the information that the UE is about to move out the coverage of the serving cell.

5. The method of one of the claims 1 to 3,
wherein the registration request message includes information that the UE is about to move out the coverage of the serving cell,
wherein the determination is performed, based on the information that the UE is about to move out the coverage of the serving cell.

6. An AMF (Access and Mobility management Function) to perform communication, comprising:
a transceiver; and
a processor,
wherein the processor performs operation comprising:
receiving, from a UE (User Equipment), a registration request message;
wherein the registration request message includes capability information for MO (Mobile Originated) backoff mode of the UE,
determining that the UE is about to move out of coverage of a serving cell for the UE;
transmitting, to the UE, a registration accept message;
transmitting, to the UE, an indication to the UE to operate the MO backoff mode, based on the determination that the UE is about to move out of coverage of the serving cell.

7. The AMF of claim 6,
wherein the indication includes a timer for the MO backoff mode,
wherein the timer is based on subscriber information, location of the UE or information related to the coverage of the serving cell.

8. The AMF of claim 6 or claim 7, wherein the operation further comprises:
performing to trigger UCU (UE Configuration Update) procedure, based on the determination that the UE is about to move out of coverage of the serving cell,
wherein the step of transmitting the indication is performed based on the triggered UCU procedure.

9. The AMF of one of the claims 6 to 8, wherein the operation further comprises:
receiving, from a base station, a N2 connection release request message,
wherein the N2 connection release request message includes information that the UE is about to move out the coverage of the serving cell,
wherein the determination is performed, based on the information that the UE is about to move out the coverage of the serving cell.

10. The AMF of one of the claims 6 to 8,
wherein the registration request message includes information that the UE is about to move out the coverage of the serving cell,
wherein the determination is performed, based on the information that the UE is about to move out the coverage of the serving cell.

11. A method for performing communication, performed by a UE (User Equipment), comprising:
transmitting, to an AMF (Access and Mobility management Function), a registration request message;
wherein the registration request message includes capability information for MO (Mobile Originated) backoff mode of the UE,
receiving, from the AMF, a registration accept message;
transmitting, to a base station, MO data or signaling;
receiving, from the AMF, an indication to the UE to operate MO backoff mode, based on the AMF determining that the UE is about to move out of coverage of a serving cell for the UE;
activating MO backoff mode based on the indication,
wherein the UE skips to transmit the MO data or the signaling, based on activation of the MO backoff mode.

12. The method of claim 11,
wherein the indication includes a timer for the MO backoff mode,
wherein the timer is based on subscriber information, location of the UE or information related to the coverage of the serving cell,
wherein the UE skips to transmit the MO data or the signaling during time of the timer, based on activation of the MO backoff mode.

13. The method of claim 11 or claim 12,
wherein the registration request message includes information that the UE is about to move out the coverage of the serving cell,
wherein the step of receiving the indication is performed, based on the information that the UE is about to move out the coverage of the serving cell.

14. A UE (User Equipment) to perform communication, comprising:
a transceiver; and
a processor,
wherein the processor performs operation comprising:
transmitting, to an AMF (Access and Mobility management Function), a registration request message;
wherein the registration request message includes capability information for MO (Mobile Originated) backoff mode of the UE,
receiving, from the AMF, a registration accept message;
transmitting, to a base station, MO data or signaling;
receiving, from the AMF, an indication to the UE to operate MO backoff mode, based on the AMF determining that the UE is about to move out of coverage of a serving cell for the UE;
activating MO backoff mode based on the indication,
wherein the UE skips to transmit the MO data or the signaling, based on activation of the MO backoff mode.

15. An apparatus in mobile communication, comprising:
at least one processor; and
at least one memory storing instructions and operably electrically connectable with the at least one processor to perform operation comprising:
transmitting, to an AMF (Access and Mobility management Function), a registration request message;
wherein the registration request message includes capability information for MO (Mobile Originated) backoff mode of the apparatus,
receiving, from the AMF, a registration accept message;
transmitting, to a base station, MO data or signaling;
receiving, from the AMF, an indication to the apparatus to operate MO backoff mode, based on the AMF determining that the apparatus is about to move out of coverage of a serving cell for the UE;
activating MO backoff mode based on the indication,
wherein the apparatus skips to transmit the MO data or the signaling, based on activation of the MO backoff mode.

16. A non-volatile computer readable storage medium having recorded instructions,
wherein the instructions, based on being executed by one or more processors, cause the one or more processors to perform operation comprising:
transmitting, to an AMF (Access and Mobility management Function), a registration request message;
wherein the registration request message includes capability information for MO (Mobile Originated) backoff mode of a UE comprising the non-volatile computer readable storage medium,
receiving, from the AMF, a registration accept message;
transmitting, to a base station, MO data or signaling;
receiving, from the AMF, an indication to the UE to operate MO backoff mode, based on the AMF determining that the UE is about to move out of coverage of a serving cell for the UE;
activating MO backoff mode based on the indication,
wherein the UE skips to transmit the MO data or the signaling, based on activation of the MO backoff mode.
